# EUROPÄISCHE PATENTSCHRIFT

(11) **EP 1 581 419 B1**
(45) Veröffentlichungstag und Bekanntmachung des Hinweises auf die Patenterteilung: **11.06.2008**
(21) Anmeldenummer: 03773635.2
(22) Anmeldetag: 25.09.2003
(51) Int. Cl.: B61D 3/18

(54) **SCHIENENGEBUNDENER SCHIENENFAHRZEUGTRÄGER**
RAIL-MOUNTED RAIL VEHICLE SUPPORT
SUPPORT DE VEHICULE SUR RAILS MONTE SUR RAILS

(30) Priorität: 25.09.2002 AT 6362002 U
(43) Veröffentlichungstag der Anmeldung: 05.10.2005
(73) Patentinhaber: Florianer Bahn Forschungs- und Errichtungsgesellschaft mbH, 4490 St. Florian (AT)
(72) Erfinder: HILLBRAND, Georg, A-4490 St. Florian (AT)
(74) Vertreter: Dupal, Helmut
(86) Internationale Anmeldenummer: PCT/EP2003/010647
(87) Internationale Veröffentlichungsnummer: WO 2004/031014

(56) Entgegenhaltungen:
- BE-A- 362 371
- CH-A- 16 928
- CH-A- 17 790
- DE-A- 19 549 277
- JP-A- 57 007 753

## Beschreibung

Die Erfindung bezieht sich auf einen schienengebundenen Schienenfahrzeugträger und eine Andockstation für diesen, mit den Merkmalen des Oberbegriffes des Anspruches 1.

Solche schienengebundenen Schienenfahrzeugträger sind bekannt und werden als gezogene Fahrzeuge, mit an die für Vollbahnen geltenden Wagengrenzlängen, für den Transport von Schmalspur-Schienenfahrzeugen auf Normalspur-Strecken oder umgekehrt benutzt, beispielsweise für die Überführung von Güterwagen an einen Zielort oder auf eine andere Strecke mit gleicher Spurweite.
Diese Schienenfahrzeugträger haben einen tiefgelegten Wagenbodenrahmen und für die Ein- und Ausfahrt des getragenen Schienenfahrzeuges ein wegschwenkbares Fronttor, das nach außen zu die Pufferbrust und die Vollbahnanschlüsse trägt und beliebig rechts oder links ausgeschwenkt werden kann.

Es bestehen eine Vielzahl von Straßenbahnnetzen mit Schmalspurstrecken, deren Netz nicht an die sich erweiternden Einzugsgebieten von Städten ohne Erweiterung des Straßenbahnstreckennetzes durch Neubau oder durch Umspurung anderer bestehender Strecken mit unterschiedlicher Spurweite angepaßt werden kann.

Die Folge ist ein kompliziert aufgebauter Verkehrsverbund mit einer Überzahl von Umsteigevorgängen, mit diesen entsprechenden baulichen Maßnahmen, die zu keiner echten Vereinfachung für den Benutzer und/oder den Betreiber des Netzes führen.

Das Gleiche gilt für schmalspurige Lokal- und Regionalbahnnetze. Dazu ist demgemäß eine größere Anzahl von Fahrzeugen und die dafür nötigen Spezialbauten an den Bahnnetzen erforderlich.

Der Versuch der Umspurung auf Normalspurweite hat neben den hohen Kosten lange Zeiten der Verkehrsbehinderung und Nachteile im Betriebzur Folge, sowie Probleme mit engen Bogenradien, die von der Schmalspur viel besser und mit weniger Kraftaufwand und Verschleiß und Geräuschentwicklung überwunden werden.

Aufgabe der Erfindung ist es, einen schienengebundenen Schienenfahrzeugträger zu schaffen, mit dem es möglich ist, mit eigenem Antrieb, mit einem getragenen, insbesondere einem selbstfahrenden, Schienenfahrzeug auf der Strecke des schienengebundenen Schienenfahrzeugträgers zu fahren, unter Anpassung an die Streckennormen und ohne nennenswerte Zeitverzögerung bei der Auffahrt oder Abfahrt des getragenen Schienenfahrzeuges auf oder von einem schienengebundenen Schienenfahrzeugträger.

Diese Aufgabe wird bei einem schienengebundenen Schienenfahrzeugträger nach dem Oberbegriff des Anspruches 1 mit den Merkmalen des kennzeichnenden Teiles des Anspruches 1 gelöst. ' Die Unteransprüche betreffen besonders vorteilhafte Ausgestaltungen der Erfindung und diese bilden zusammen mit dem Anspruch 1 gleichzeitig einen Bestandteil der Beschreibung.

Mit der Ausrüstung eines schienengebundenen Schienenfahrzeugträgers mit einem Antriebsaggregat oder einer Speiseeinrichtung aus einem Spannungs- und/oder Stromumformer mit Speisung von einem Außennetz, wie einer Oberleitung oder von einer Stromspeichereinrichtung, und der Steuerung dieser Anlagen und/oder Einrichtungen und der für den selbstfahrenden Betrieb eines schienengebundenen Schienenfahrzeugträgers von dafür vorgesehenen Steuerungseinrichtungen auf dem getragenen Schienenfahrzeug direkt oder über Steuereinrichtungen des Schienenfahrzeugträgers wird es möglich die gestellte Aufgabe zu lösen und selbstfahrende Schienenfahrzeuge von der eigenen Strecke im Stadtbereich auf Strecken von Bahnen anderer Spurweite, besonders auch unter Einbeziehung von Vollbahnnetzen oder U-Bahnnetzen zu führen ohne daß dadurch besonders große Aufwendungen technischer Art in den Konstruktionen der Fahrzeuge oder baulicher Art für die Streckenherstellung und damit finanzieller Art zu tätigen wären. Dabei treten für die Benutzer keine nennenswerten Verzögerungen bei der Zugförderung, bedingt durch den Streckenwechsel auf.

Eine besonders leistungsfähige und wegen der Verwendung bekannter Einrichtungen sicher zuverlässige mechanische Befestigung und elektrischen Verbindung des getragenen Schienenfahrzeuges auf dem selbstfahrenden schienengebundenen Schienenfahrzeugträger mit diesem wird mit der Anwendung bekannter mechanischer und elektrischer Kupplungselemente erreicht, wobei mit der Einbeziehung eines Fronttores für diese Kupplung- und Verbindungselemente und die Freigabe des Gleises für Auf- und Abfahrt des getragenen Schienenfahrzeuges sehr wesentlich vereinfacht wird, ohne daß dadurch die Sicherheit der Befestigung beim Transport beeinträchtigt wird. Mit der steuerbaren mechanischen Kupplungseinrichtung wird ein rasches Verbinden und Lösen und mit der elektrischen Steckerkupplungseinrichtung, besonders in erweiterter Form, wird Steuerung und Datenaustausch zwischen den beiden Fahrzeugen verbessert, was die Anwendungsweise im Fahrbetrieb erleichtert.

Der Übergang von einer Strecke auf die andere macht für die rasche einfache Ausführung eine Andockeinrichtung mit einer Andockrampe zum Auf- und Abfahren des getragenen und insbesondere selbstfahrenden Schienenfahrzeuges auf und von dem selbstfahrenden schienengebundenen Schienenfahrzeugträger erforderlich, bei der eine gerade Zufahrt beider Fahrzeuge den Übergang sehr erleichtert. Der Schienenfahrzeugträger bedarf für das sichere rasche Andocken beiderseite einen Rampenpuffer und eine steuerbare Kupplungseinrichtung.
Für die Fahrt auf der Vollbahnstrecke, gewöhnlich in Normalspur, ist es vorteilhaft wenn die Fronttore außen die Pufferbrust und die vorgeschriebenen Anschlüsse, sowie Beleuchtungseinrichtungen tragen.

Bei Verwendung der Fremdspeisung des Schienenfahrzeugträger über die Oberleitung ist zusätzlich eine für Starkstrom geeignete elektrische Kupplungsverbindung wesentlich, die aber der mechanischen und der elektrischen Kupplungseinrichtung beigeordnet sein muß, um zu vermeiden, daß die Herstellung oder das Lösen dieser Verbindung den Streckenübergang durch zusätzliche aufwendige Handhabung erschwert.

Wegen der universellen Verwendbarkeit des Schienenfahrzeugträgers ist die Anbringung von Fronttoren an beiden Stirnseiten wichtig, wobei die Kupplung sinnvoll in Fahrtrichtung erfolgt, während das andere Ende des getragenen Schienenfahrzeuges frei bleibt; es ist aber auch möglich die Längenabmessungen so zu wählen, daß die Kupplung an beiden Enden des getragenen Schienenfahrzeuges erfolgt, jedoch ist der Aufwand daurch erhöht.

Es ist auch möglich, das Fronttor aus zwei Flügeln aufzubauen, um etwa das seitliche Auskragen zu Verringern.

Für das beliebige Öffnen und Schließen der Fronttore ist es von Vorteil, diese nach unten zu über den Schienenköpfen der Schienen des getragenen Schienenfahrzeuges enden zu lassen.

Die Fronttore eignen sich wegen der kurzen Distanz zu der zugeordneten Kupplungsvorrichtung und wegen der Möglichkeit diese auch mit wesentlich größerer Dicke und Höhe als bekannte Fronttore an schienengebundenen Trägerfahrzeugen auszubilden dazu, um Antriebsaggregate oder Speiseeinrichtungen mit entsprechend großen Abmessungen unterzubringen; diese können gleich gut Verbrennungskraftmaschienen mit elektrischer Generatorkopplungoder hydraulischer Pumpenkopplung sein, wie Benzinmotore, Gaturbinen, Sterlingmaschinen oder besonders Dieselmotore oder Transformatoren und/oder Umrichter oder elektrische oder motorische Umformer oder leistungsstarke Energiespeicher, wie Akkumulatoren, elektrochemische Stromerzeuger oder mechanische Trägheitsspeichereinrichtungen sein.

Diese können auch in Rahmenwangenaufsätzen untergebracht sein, die auf den Wagenrahmenwangen aufgesetzt sind, sofern nicht Türbereiche des getragenen Schienenfahrzeuges freizuhalten sind.

Nachdem die Konstruktion des Schienenfahrzeugträgers als Niederflurwagen mit sehr tief gelegtem Wagenbodenrahmen wenig Raum für Einbauten läßt, ist es sehr sparend, die Rahmenwangenaufsätze dafür zu nutzen und Vorrichtungen der Fahrbetriebeinrichtungen, der Speiseeinrichtungen, der Stromspeichereinrichtungen samt Regel- und Ladeeinrichtungen, Beleuchtungs- und Kontrolleinrichtungen, sowie die Einrichtungen zur Fahrsteuerung und Bremsung hier einzubauen und/oder die Behälter der Betriebsmittel und/oder Betriebsstoffe einzubauen.

Bei der Fahrt eines getragenen Schienenfahrzeuges mit dem selbstfahrenden Schienenfahrzeugträger auf dessen Strecke werden häufig die Bahnsteigkanten nicht mit der Höhe des Wagenbodens übereinstimmen und den zulässigen Abstand zum getragenen Schienenfahrzeug haben, was für die Verkehrsabwicklung am günstigsten wäre.
Ist nur die Überbrückung des Abstandes in waagrechter Richtung notwendig, so gelingt dies mit Auftritten auf den Wagenrahmenwangen des selbstfahrenden Schienenfahrzeugträgers oder mit steuerbaren Anordnungen, bei denen ein Auftritt bei der Öffnung einer Türe in die für den Aus- und Einstieg geeignet Lage automatisch bewegt wird; das Gleiche gilt für die Anpassung an Höhenunterschiede zwischen Wagenboden und Bahnsteigkante.

Es ist aber auch möglich die Wagenrahmenwangen des selbstfahrenden Schienenfahrzeugträgers in der geeigneten Höhe enden zu lassen und ortsfeste Auftritte anzubringen.

Bei Speisung von elektrischen Fahrmotoren, als Antriebe des selbstfahrenden Schienfahrzeugträgers, von der Oberleitung seiner Strecke, ist es eine besonders vorteilhafte Lösung die Zuleitung über das getragene Schienenfahrzeug zu führen, wofür dann eine Starkstromkupplung, günstigerweise ebenfalls gesteuert kuppelbar vorzusehen ist und die Speisung falls die Spannungsverhältnisse dies erfordern über einen Spannungsumsetzer durchzuführen, der an dem getragenen Schienenfahrzeug, vorzugsweise auf dem Dach, angebracht sein muß.

Die Ausstattung des Antriebes des Schienenfahrzeugträgers kann vielfältig sein, mit einem oder mehreren Aggregaten, dies mit Brennkaftmaschinen, vor Allem mit Verbrennungskraftmaschinen, wie Benzin- oder Dieselmotor, Gasturbine, Sterlingmaschine, Verbrennungsmotor-elektrisch oder -hydraulisch oder bei Speisung vom getragenen Schienenfahrzeug (2) elektrohydraulisch ausgebildet ist oder aus einem Elektroumformer einem Spannungs/Stromumrichter besteht, je nach der Ausrüstung der Strecke des Schienenfahrzeugträgers.

Bei den modernen Schienenfahrzeugen der Straßenbahnen sind durch die Gelenkbauweise Baulängen möglich, die über das auf Vollbahnstrecken, aber auch auf Lokalbahnstrecken zulässige Maß eines ungelnkigen Schienenfahrzeuges hinausgehen, wodurch die Aufteilung des selbstfahrenden Schienenfahrzeugträgers in zwei oder mehr gelenkig verbundene Teilfahrzeuge notwendig sein kann, wobei die freien Stirnseiten mit Fronttoren versehen sind und das getragene Schienenfahrzeug, wegen der einfacheren Manövrierung und der größeren Stabilität auf der Fahrt, bevorzugt an dem Kupplungsanschluß an dem in Fahrtrichtung liegenden Fronttor angekuppelt wird; während auch die Kupplung an den Kupplungen der beiden Fronttorebei abgestimmten Baulängen möglich ist.

Eine besonders bevorzugte Ausführungsform ist der aus zwei Schienenfahrzeugträgerteilen bestehende Schienenfahrzeugträger mit gelenkiger Verbindung, wobei besonders günstig ist wenn die lotrechte Gelenksachse mit der Gelenksachse eines Wagengelenkes des getragenen Schienfahrzeuges zusammenfällt, weil dann die Schienen auf den Schienenfahrzeugträger im Gelenk mit einem Ausgleich für die Bogenfahrt versehen sein kann, ohne daß das getragenen Schienenfahrzeug eine nennenswerte Längsbewegung ausführt, die sonst auf die Räder übertragen wird.

Ein wirksame Möglichkeit für den Längenausgleich an den Schienen des getragenen Schienenfahrzeuges bei Bogenfahrt des Schienenfahrzeugträgers ist es diese als Ganzes verschieblich zu lagern, doch müssen dann die Räder des Fahrwerkes während der Fahrt auf dem selbstfahrenden Schienenfahrzeugträger ungebremst sein, um schleifen zu vermindern oder die Räder sind auf Verdrehung lösbar an den Achsen angebracht und dann frei drehbar.

Eine andere Möglichkeit besteht in der Anwendung von ortsfesten Schienen, bei denen im Gelenkbereich bei gerader Stellung der Teilwagen und offenem Fronttor ein Schienenzwischenstück eingesetzt ist, das beim Schließen desselben herausverschoben oder verschwenkt wird, sodaß bei Bogenfahrt die Abstandsänderungen frei ausgeglichen werden können.

Eine andere Möglichkeit besteht darin, daß die Schienenköpfe geteilt sind und jeweils ein Rechts- und ein Linksteil sich zu einer Schiene ergänzen und aneinander entlanggleitend angeordnet sind und den Längenausgleich bei Bogenfahrt des Schienenfahrzeugträgers ermöglichen.

Für gewöhnlich ist das getragenen Schienenfahrzeug selbstfahrend eingerichtet, mit elektrischem Antrieb über die Oberleitung, zumeist Straßenbahnzüge in moderner Niederflurbauweise, bestehend aus einem oder mehreren mit Gelenken verbundenen Teilwagen. Es ist aber auch möglich einen Antrieb mit Verbrennungskraftmaschinen mit elektrischer Kopplung, wie auch für den Schienenfahrzeugträger vorgeschlagen, vorzusehen, bei denen dann die Speisung der Fahrmotore des Schienenfahrzeugträgers vom getragenen Schienenfahrzeug aus erfolgen kann.

Eine wichtige Maßnahme ist die Verwendung des überschüssigen traktionsstromes und/oder des Bremsstromes des Schienenfahrzeugträgers für die Heizung des getragenen Schienenfahrzeuges mittels einer zusätzlichen Schalteinrichtung um dadurch das jeweilige Antriebsaggregat zu entlasten und Energie einzusparen.

Für den Betrieb des Schienenfahrzeugträgers ohne getragenes Schienenfahrzeug ist die Anbringung eines Hilfsfahrstand unerläßlich.

Der Schienenfahrzeugträger ist auch geeignet, um Fahrzeuge zur Bahnerhaltung, wie Gleisbaumaschinen oder dergleichen von einer Strecke auf die andere zu überführen, wodurch sich auch in diesem Bereich erhebliche Einsparungen ergeben können.

Die Erfindung wird an Hand von zwei Ausführungsbeispielen beschrieben.
Es zeigt:
- Fig. 1: einen schienengebundenen dieselgetriebenen Schienenfahrzeugträger an einer Andockrampe, mit selbstfahrendem Schienenfahrzeug auf der Andockrampe, in Seitenansicht, schematisch;
- Fig. 2: einen schienengebundenen Schienenfahrzeugträger nach Fig.1 in Draufsicht, schematisch;
- Fig. 3: den schienengebundenen dieselgetriebenen Schienenfahrzeugträger an der Andockrampe, nach Fig.1, mit aufgefahrenem und in Fahrtrichtung angedocktem selbstfahrendem Schienenfahrzeug, in Seitenansicht, schematisch;
- Fig. 4: den schienengebundenen Schienenfahrzeugträger an einer Andockrampe, nach Fig.3, mit aufgefahrenem und in Fahrtrichtung angedocktem selbstfahrendem getragenen Schienenfahrzeug, in Draufsicht, schematisch;
- Fig. 5: den schienengebundenen dieselgetriebenen Schienenfahrzeugträger mit getragenem und in Fahrtrichtung angedocktem selbstfahrendem Schienenfahrzeug in Bogenfahrt, in Draufsicht, schematisch;
- Fig. 6: den schienengebundenen dieselgetriebenen Schienenfahrzeugträger mit geöffnetem rampenseitigem Fronttor in Fahrzeugrichtung gesehen, an eine Andockrampe angedockt, diese im Querschnitt, schematisch;
- Fig. 7: den schienengebundenen dieselgetriebenen Schienenfahrzeugträger mit getragenem selbstfahrendem Schienenfahrzeug im Querschnitt, mit Stufe an einer Bahnsteigkante, schematisch;
- Fig. 8: den schienengebundenen elektrogetriebenen Schienenfahrzeugträger mit getragenem selbstfahrendem Schienenfahrzeug im Querschnitt eben mit einer Bahnsteigkante, schematisch;
- Fig. 9: den schienengebundenen dieselgetriebenen Schienenfahrzeugträger mit geöffnetem Fronttor im Querschnitt, mit getragenem selbstfahrendem Schienenfahrzeug, mit Stufe an einer Bahnsteigkante, schematisch;

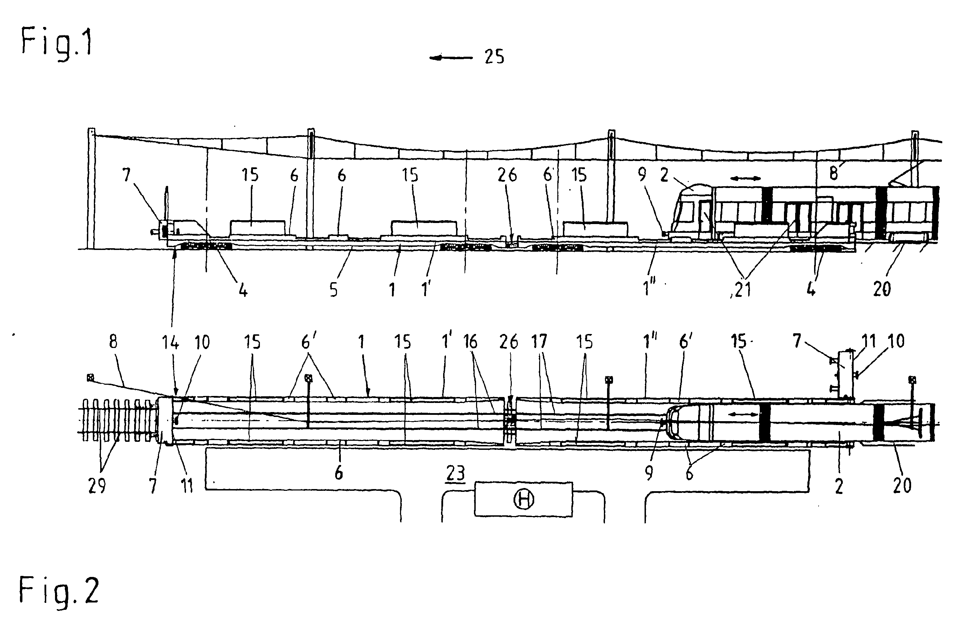

In Fig. 1 und 2 ist ein schienengebundener dieselgetriebener, also selbstfahrender Schienenfahrzeugträger 1 dargestellt, der auf einem Gleis 29 seiner Strecke, dessen Schienen beispielsweise in Normalspur, verlegt sind, an eine Andockrampe 20 herangefahren und (nicht dargestellt) angedockt ist, auf der Schienen 30 eines Gleise 27, beispielsweise in Schmalspur, bis an deren Kante laufen, die mit den Schienen 17 eines Gleises 16 auf dem Schienenfahrzeugträger 1 durchlaufend, auf dem Wagenbodenrahmen 5 angebracht sind.

Der schienengebundenen dieselgetriebenen Schienenfahrzeugträger 1 ist als Niederflurwagen ausgebildet, dessen Wagenbodenrahmen 5 zwischen den Radsätzen 4 im Bereich des oberen Umfanges der Räder 3 liegt.

Der Schienenfahrzeugträger 1 besteht aus zwei Fahrzeugträgerteilen 1' ,1", die miteinander über eine Gelenkverbindung 26 verbunden sind, um getragene Schienenfahrzeuge 2 größerer Länge, wie Mehrgelenk-Schienenfahrzeuge, etwa Straßenbahn-Niederflurtriebwagen, deren Gesamtlänge die zulässige Gesamtlänge für einen ungelenkigen Einzelwagen auf der Strecke des Schienenfahrzeugträgers 1 überschreitet, aufnehmen und transportieren zu können.

Der selbstfahrende Schienenfahrzeugträger 1 weist beiderseits des Wagenbodenrahmens 5 Wagenrahmenwangen 6,6' auf, die nach außen über die Höhe der Schienen 17 des getragenen Schienenfahrzeuges 2 hochgezogen sind und an Stellen, an denen keine Türen des getragenen Schienenfahrzeuges 2 in einer angedockten Transportstellung zu liegen kommen, mit Rahmenwangenaufsätzen 15 versehen sind. Diese sind für die Aufnahme von Einrichtungen für den Fahr- und Bremsbetrieb, für die Sicherung, für die Beleuchtung, für Sensorik und Datenübertragung und Vorratsbehälter für Betriebsmittel, wie Kraftstoff, Schmiermittel, Bremshilfsmittel, aber erforderlichenfalls auch Antriebsaggregate, Spannungswandler, elektrische Umformer, Stromspeicher, elektrochemische Stromerzeuger oder dergleichen untergebracht.

An den beiden Stirnseiten 14,14' des Schienenfahrzeugträgers 1 sind Fronttore 7 oder jeweils ein Paar Fronttorflügeln (nicht dargestellt) an den Wagenrahmenwangen 6,6', um lotrechte Schwenkachsen, nach außen verschwenkbar gelagert.

In Fig. 1 ist dargestellt, wie ein elektrisch betriebenes selbstfahrendes Schienenfahrzeug 2 von einer Oberleitung 8 gespeist, in Form eines Mehrgelenk-Niederflur-Sraßenbahnzuges für Personenbeförderung, von einer Andockrampe 20 auf einen schienengebundenen dieselgetriebenen Schienenfahrzeugträger 1 auffährt, bei dem das Fronttor 7 der Andockrampe 20 an der der Andockrampe 20 zugewandten Stirnseite 14' geöffnet ist und in Fig. 2 ist der Schienenfahrzeugträger 1 von oben gesehen, an die Andockrampe 20 herangefahren, ohne aufgefahrenes selbstfahrendes getragenes Schienenfahrzeug 2 dargestellt.

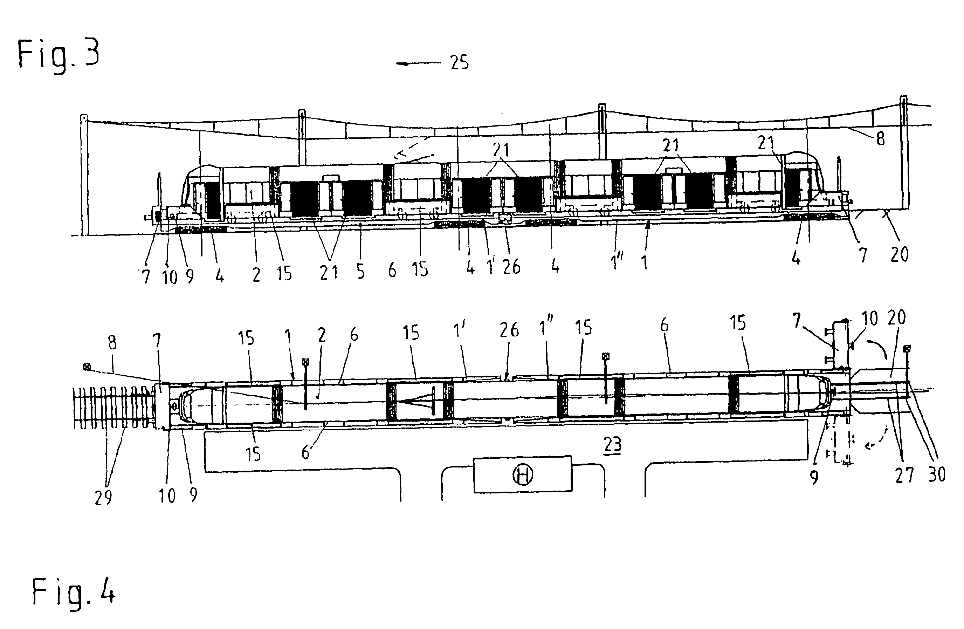

In Fig. 3 und 4 ist das selbstfahrende getragene Schienenfahrzeug 2 auf den Schienenfahrzeugträger 1 aufgefahren, von der Oberleitung 8 getrennt und an der in Fahrtrichtung 25 liegenden Stirnseite des Schienenfahrzeugträgers 1 an dem mechanischen Kupplungsanschluß 10 des Fronttores 7 mit der steuerbaren mechanischen Kupplung 9 gekuppelt wiedergegeben, wobei das andere Fronttor 7, das der Andockrampe 20 zugewandt ist noch geöffnet ist; das getragene Schienenfahrzeug 2 befindet sich dabei in einer Position an der Bahnsteigkante 23 einer Haltestelle.

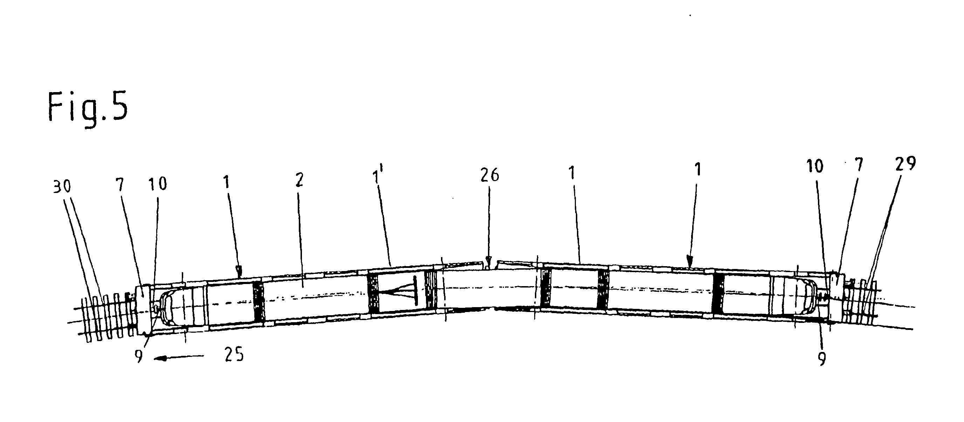

Die Darstellung in Fig.5 zeigt den Schienenfahrzeugträger 1, mit dem getragenen Schienenfahrzeug 2, auf einem Bogen des Gleises 29 seiner Strecke und es ist ersichtlich, daß die Gelenkteile des getragenen Schienenfahrzeuges 2 symmetrisch zu der Gelenksverbindung 26 zwischen den beiden Schienenfahrzeugträgerteilen 1',1" liegen.

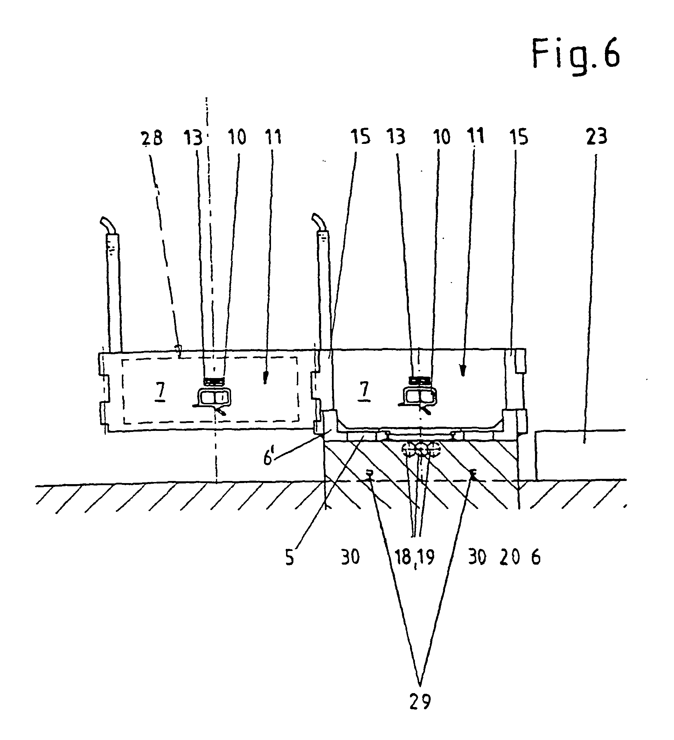

Fig.6 zeigt den Schienenfahrzeugträger 1 an der Andockrampe 20 mit Rampenpuffer 18 und mechanischem Verriegelungsanschluß 19, bei geöffnetem Fronttor 7, seitlich nach außen geschwenkt, auf die von der Bahnsteigkante 23 der Strecke abgewandte Seite.

Bei beiden Fronttoren 7 ist an der Innenseite 11 der mechanische Kupplungsanschluß 10 und der beigeordnete Steckerkupplungsanschluß 13 dargestellt.

Bei dem, nach der Andockrampe 20 zu liegendem, Fronttor 7 ist das eingebaute dieselelektrische Antriebsaggregat 28 und die Abgasleitung angedeutet.

Der tiefgelegte Wagenbodenrahmen 5 des Schienenfahrzeugträgers 1 trägt die eingelassenen Schienen 26 des Gleises 27 des getragenen Schienenfahrzeuges 2. Seitlich sind die Wagenrahmenwangen 6,6' etwas über das Niveau der Bahnsteigkante 23 hochgezogen und mit Rahmenwangenaufsätzen 15 versehen.

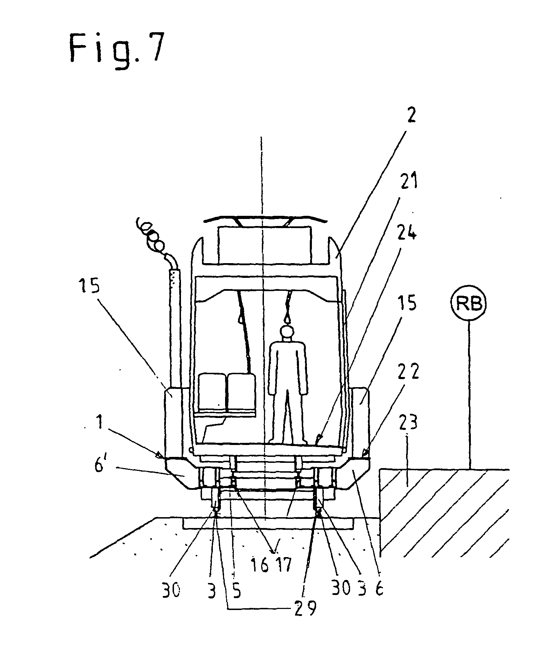

In Fig. 7 ist der Schienenfahrzeugträger 1 an einer Haltestelle auf der Strecke dargestellt, wobei die Räder 3 auf dem Gleis 29 laufen. Weiters ist das selbstfahrende getragene Schienenfahrzeug 2, als Niederflur-Straßenbahntriebwagen ausgebildet, wiedergegeben, dessen Wagenboden 24 höher liegt als die Bahnsteigkante 23, wobei die Wagenrahmenwangen 6,6' der Höhe nach dazwischen liegen und seitlich weiter nach außen vorkragen und an den Türen 21 als Auftritte 22 ausgebildet, eine Zwischenstufe bilden und neben den Türen 21 sind auf den Schienenfahrzeugträgers 1 die Rahmenwangenaufsätze 15 angebracht.

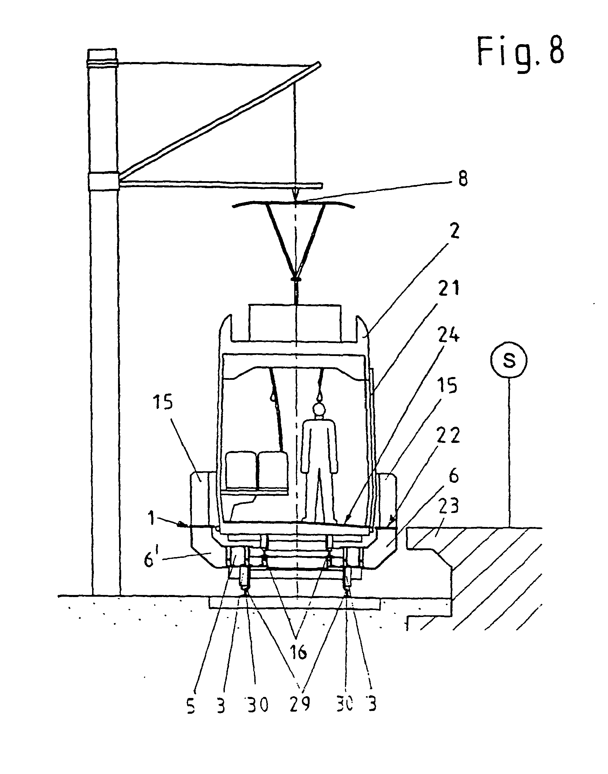

In Fig.8 sind die Höhe von Bahnsteigkante 23, Höhe der Schienen 30 der Strecke des Schienenfahrzeugträgers 1 Höhe der Schienen des Gleises 16 des selbstfahrenden getragenen Schienenfahrzeuges 2 und dessen Wagenboden 24 aufeinander abgestimmt, wobei der Boden des getragenen Schienenfahrzeuges 2, die Bahnsteigkante 23 und die Auftritte an den Türen 21 auf dem gleichen Niveau liegen und der waagrechte Abstand zwischen diesen wenigstens den Vorschriften genügend vorgesehen ist. Das getragene Schienenfahrzeug 2 ist über den Stromabnehmer mit der Oberleitung auf der Strecke des Schienenfahrzeugträgers 1 verbunden, über die die Speisung des Antriebes desselben erfolgen kann.

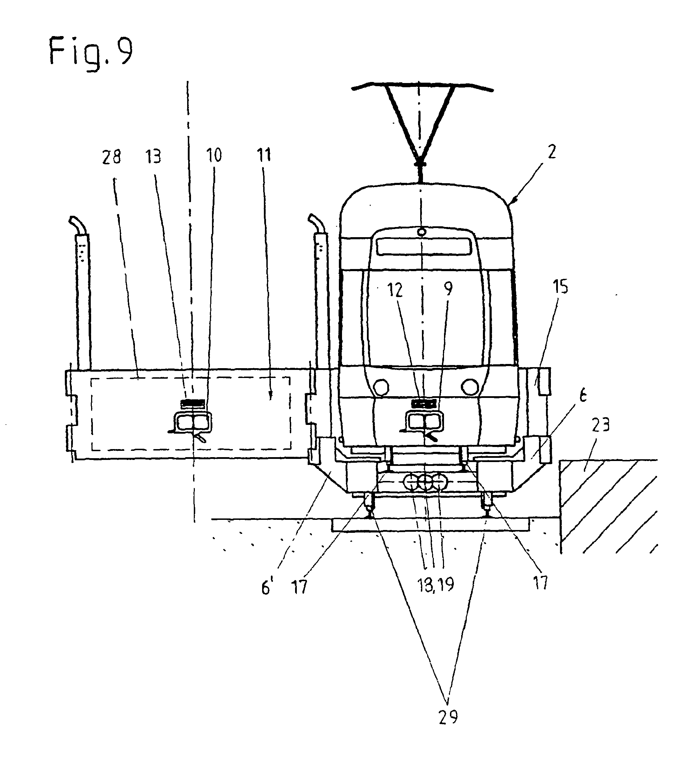

Fig.9 zeigt einen Schienenfahrzeugträgers 1 an der Bahnsteigkante 23 einer Haltestelle, mit geöffnetem seitlich nach außen verschwenktem Fronttor 7 und zeigt hier die mechanische steuerbare Kupplung 9 und die beigeordnete, insbesondere steuerbare Steckerkupplung 12 des getragenen selbstfahrenden Schienenfahrzeuges 2 für den mechnischen Kupplungsanschluß 10 und den Steckerkupplungsanschluß 13 des selbstfahrenden Schienenfahrzeugträgers 1.

Bei der Anbindung eines Schienennetzes mit anderer Spurweite, etwa Vollbahn-, Lokalbahn-, U-Bahnnetz an das städische Straßen-bahnnetz oder eines anderen Straßenbahnnetzes gleicher Spur-weite direkt oder über die Benutzung der genannten anderen Netze werden an den Übergangsstellen der Netze Andockrampen 20 erstellt, die möglichst in gerader Linie an eine Anschlußstrecke geführt sind, in einer Höhe, daß ein niveaugleicher Übergang auf den selbstfahrenden Schienenfahrzeugträger 1 erfolgen kann.
In Fig. 1 und 2 ist ein angedockter dieselgetriebener Schienenfahrzeugträger 1 mit geöffnetem Fronttor 7 an der Andockrampe 20 gezeigt, der auf dem Gleis 29 seiner Strecke herangefahren wurde. Von der Andockrampe 20, auffahrend auf das Gleis 16 auf dem Schienenfahrzeugträger 1, ist ein selbstfahrendes getragenes Schienenfahrzeug 2, in Gestalt eines Straßenbahn-Gelenkwagenzuges, wiedergegeben.
In Fig. 3 und 4 ist das auf den Schienenfahrzeugträger 1 aufgefahrene getragene Schienenfahrzeug 2 dargestellt, das mit seiner steuerbare mechanischen Kupplung 9 und mit seiner beigeordneten steuerbaren Steckerkupplung 12 (nicht sichtbar) an den mechanischen Kupplungsanschluß 10 und den elektrischen Steckerkupplungsanschluß 13 an der Innenseite 11 des gegenüberliegenden geschlossenen Fronttors 7 angekuppelt ist.
Der Transport erfolgt dann je nach Bauart der Schienen 17 - längsverschieblich oder gelenkig gelagert - für das getragene Schienenfahrzeug 2 mit gebremsten oder ungebremsten Rädern 3.

An einem Streckenübergang wird die gleiche bauliche Anordnung verwendet und der Entkupplungs- und der Abdockvorgang verläuft in umgekehrter Richtung, worauf das getragene Schienenfahrzeug 2 sich im anderen Netz bewegt und so weiter; es ist daraus die entscheidende Vereinfachung für eine nahezu beliebige Erweitung eines bestehenden Netzes unter Einbeziehung weiterer anders aufgebauter Netze erkennbar, für die gegenüber Neubau oder Umspurung nur ein geringer Aufwand für Umbauten und zusätzliche Fahrzeuge erforderlich wird und gleichzeitig keine nenneswerte Verzögerung der Zugförderung zur Folge hat.

### Bezugszeichenliste

- 1: selbstfahrender schienengebundener Schienenfahrzeugträger
- 1', 1'': Schienenfahrzeugträgerteil
- 2: selbstfahrendes Schienenfahrzeug
- 3: Rad des Radsatzes 4
- 4: Radsatz des selbstfahrenden schienengebundenen Schienenfahrzeugträgers 1
- 5: Wagenbodenrahmen des Schienenfahrzeugträgers 1
- 6,6': Wagenrahmenwange des Schienenfahrzeugträgers 1
- 7: Fronttor des Schienenfahrzeugträgers 1
- 8: elektrische Oberleitung des getragenen selbstfahrenden Schienenfahrzeuges 2
- 9: steuerbare mechanische Kupplung des selbstfahrenden Schienenfahrzeuges 2
- 10: mechanischer Kupplungsanschluß an der Innenseite 11 des Fronttores 7
- 11: Innenseite des Fronttores 7
- 12: steuerbare Steckerkupplung, der mechanischen Kupplung 9 beigeordnet
- 13: Steckerkupplungsanschluß, dem mechanischen Kupplungsanschluß 10 des Fronttores 7 beigeordnet
- 14,14': Stirnseite des Schienenfahrzeugträgers 1
- 15: Rahmenwangenaufsatz des Wagenbodenrahmens 5 des Schienenfahrzeugträgers 1
- 16: Gleis des selbstfahrenden Schienenfahrzeuges 2 auf dem Wagenbodenrahmen 5
- 17: Schiene des Gleises 16
- 18: Rampenpuffer des Schienenfahrzeugträgers 1
- 19: mechanischer Verriegelungsanschluß des Schienenfahrzeugträgers 1
- 20: Andockrampe für den Schienenfahrzeugträgers 1
- 21: Tür des selbstfahrenden Schienenfahrzeuges 2
- 22: Auftritt einer Wagenrahmenseitenwange 6,6' an einer Türe 21 des des selbstfahrenden getragenen Schienenfahrzeuges 2
- 23: Bahnsteigkante der Strecke des Schienenfahrzeugträgers 1
- 24: Wagenboden des selbstfahrenden getragenen Schienenfahrzeuges 2
- 25: Fahrtrichtung des Schienenfahrzeugträgers 1 bei Abfahrt von der Andockrampe 20
- 26: Gelenkverbindung zwischen den Schienenfahrzeugträgerteilen 1' und 1"
- 27: Gleis auf der Andockrampe 20
- 28: Antriebsaggregat
- 29: Gleis der Strecke des Schienenfahrzeugträgers 1
- 30: Schiene des Gleises 27

## Patentansprüche

1. Schienengebundener Schienenfahrzeugträger (1) mit mehreren Radsätzen (4), deren Räder von einer Bremsanlage gebremst werden, mit einem Wagenbodenrahmen mit Wagenrahmenwangen, dessen Oberkante im Bereich des oberen Umfanges der Räder der Radsätze oder darüber liegt mit zwei Rollwege für die Räder eines getragenen Schienenfahrzeuges (2) und mit wenigsten einem an einer Stirnseite angebrachten Fronttor (7), das an einer Wagenrahmenwange um eine im wesentlichen lotrechte Schwenkachse seitlich nach außen verschwenkbar gelagert ist, wobei das Fronttor (7) in der, die Stirnseite des Schienenfahrzeugträgers (1) verschließenden Lage verriegelbar ist und an dem nach außen zu, insbesondere eine Pufferbrust, die Fahrzeuganschlüsse mit den Anschlußarmaturen und Beleuchtungseinrichtungen angebracht sind und der schienengebundene Schienenfahrzeugträger (1) mit Fahrmotoren (28) wenigstens an einem oder an mehreren oder an allen Radsätzen oder Rädern selbstfahrend eingerichtet ist, die über wenigstens eine Speiseeinrichtung angetrieben werden, die auf dem Schienenfahrzeugträger angebracht ist, auf dem weiters zumindest Bremsanlage, Fahrbetriebseinrichtungen und Sicherungseinrichtungen angebracht sind, die über eine oder mehrere auf dem Schienenfahrzeugträger vorhandene Steuereinrichtung(en) gesteuert werden und wobei der Schienenfahrzeugträger mit einer Andockeinrichtung für eine Andockrampe versehen ist **dadurch gekennzeichnet, daß** der selbstfahrende schienengebundene Schienenfahrzeugträger (1), dessen Fahrmotore entweder von wenigsten einem Antriebsaggregat (28) oder von der auf diesem angebrachten Speiseeinrichtung angetrieben werden, die Schienen eines Gleises als Rollwege für ein getragenes selbstfahrendes Schienenfahrzeug (2) und überdies Beleuchtungseinrichtung und Sensoreinrichtungen trägt, die ebenso wie die Bremsanlage, Fahrbetriebseinrichtungen und Sicherungseinrichtungen entweder über die auf dem Schienenfahrzeugträger (1) vorhandene Steuereinrichtung(en) und über wenigstens eine dafür vorgesehenen Steuereinrichtung des getragenen Schienenfahrzeuges (2) oder wenigstens ein Teil davon, im wesentlichen unmittelbar, von der/den dafür vorgesehenen Steuereinrichtung(en) des getragenen Schienenfahrzeuges (2) gesteuert werden und/oder Daten der Anlagen und Einrichtungen übertragen.

2. Schienengebundener Schienenfahrzeugträger, nach dem vorhergehenden Anspruch, **dadurch gekennzeichnet, daß** das wenigstens eine Fronttor (7) des selbstfahrenden Schienenfahrzeugträgers (1) an der Innenseite (11) mit einem mechanischen Kupplungsanschluß (10) versehen ist, der mit einer, vorzugsweise von dem getragenen Schienenfahrzeuges (2) aus steuerbaren, mechanischen Kupplung (9) kuppelbar ist und mit einem an dem Fronttor (7) beigeordneten Steckerkupplungsanschluß (13) ausgestattet ist, der mit einem der mechanischen Kupplung (9) beigeordneten Steckerkupplung (12), insbesonders einer steuerbaren Steckerkupplung, vorzugsweise für eine Vielfachsteuerung mit erweiterten Funktionsumfang, kuppelbar ist, mit dem die Steuerungseinrichtungen des getragenen Schienenfahrzeuges (2) an den selbstfahrenden Schienenfahrzeugträger (1) anschließbar sind.

3. Schienengebundener Schienenfahrzeugträger, nach einem der vorhergehenden Ansprüche, **dadurch gekennzeichnet, daß** der selbstfahrende Schienenfahrzeugträgers (1) an der Stirnseite (14,14') mit einer Andockeinrichtung ausgestattet ist, die an den jeweils mit wenigstens einem Rampenpuffer (18) und einem steuerbaren mechanischen Verriegelungsanschluß (19) für eine zugeordnete Andockrampe (20) versehen ist, die mit einer angepaßten Rampenpufferaufnahme und mit einem mechanischen Verriegelungsstück eingerichtet ist.

4. Schienengebundener Schienenfahrzeugträger, nach einem der vorhergehenden Ansprüche, **dadurch gekennzeichnet, daß** zusätzlich zu der steuerbaren Steckerkupplung (12) und dem Steckerkupplungsanschluß (13) ein Starkstromkupplungsstecker des Schienenfahrzeuges (2) und ein zusätzlicher Starkstromkupplungssteckeranschluß des selbstfahrenden Schienenfahrzeugträgers (1), für die Zuleitung des Speisestromes für die Fahrmotore an die Fahrstromumrichter und/oder des Bremsstromes der Fahrmotore an die Bremswiderstände des getragenen Schienenfahrzeuges (2), vorgesehen ist.

5. Schienengebundener Schienenfahrzeugträger, nach einem der vorhergehenden Ansprüche, **dadurch gekennzeichnet, daß** an jeder Stirnseite (14,14') des Schienenfahrzeugträgers (1) ein Fronttor (7) angelenkt ist.

6. Schienengebundener Schienenfahrzeugträger, nach einem der vorhergehenden Ansprüche, **dadurch gekennzeichnet, daß** das Fronttor (7) aus zwei, vorzugsweise gleich breiten, Fronttorflügeln besteht, die an den beiden Wagenrahmenwangen (6,6') verschwenkbar gelagert und miteinander und insbesondere mit dem Wagenbodenrahmen (5), verriegelbar sind.

7. Schienengebundener Schienenfahrzeugträger, nach einem der vorhergehenden Ansprüche, **dadurch gekennzeichnet, daß** das Fronttor (7) und die Fronttorflügel nach unten zu über der Höhe der Schienenköpfe der Schienen (17) des getragenen Schienenfahrzeuges (2), enden.

8. Schienengebundener Schienenfahrzeugträger, nach einem der vorhergehenden Ansprüche, **dadurch gekennzeichnet, daß** zumindest in einem Fronttor (7) oder in Rahmenwangenaufsätzen (15) das Antriebsaggregat (28) und/oder eine oder mehrere Speiseeinrichtung(en) und insbesondere dessen/ deren Steuereinrichtung(en) und/oder die Steuereinrichtungen der Bremsanlage, sowie der Fahrbetriebseinrichtungen und der Sicherungseinrichtungen und der Sensoreinrichtungen des selbstfahrenden Schienenfahrzeugträgers (1) eingebaut sind.

9. Schienengebundener Schienenfahrzeugträger, nach einem der vorhergehenden Ansprüche, **dadurch gekennzeichnet, daß** die Rahmenwangenaufsätze (15) auf den Wagenrahmenwangen (6,6') des Schienenfahrzeugträgers (1), zumindest über die Breite der Türen (21) des getragenen Schienenfahrzeuges (2), ausgespart sind.

10. Schienengebundener Schienenfahrzeugträger, nach einem der vorhergehenden Ansprüche, **dadurch gekennzeichnet, daß** die Rahmenwangenaufsätze (15) für den Einbau von Vorrichtungen der Fahr- und Bremsbetriebseinrichtungen und/ oder von Speiseeinrichtungen, wie Stromumformer, elektrochemische Stromerzeuger oder Energiespeicher aller Art, wie Akkumulatorenanlagen, Ladeeinrichtungen dafür, Beleuchtungs- und/ oder Kontrolleinrichtungen und Behälter und Einrichtungen für Betriebsmittel und/oder Betriebsstoffe oder dergleichen eingerichtet sind.

11. Schienengebundener Schienenfahrzeugträger, nach einem der vorhergehenden Ansprüche, **dadurch gekennzeichnet, daß** die Wagenrahmenwangen (6, 6') des Schienenfahrzeugträgers (1), zumindest über die Breite der Türen (21), mit Auftritten (22) entweder in Höhe der Bahnsteigkanten (23) auf der Strecke des Schienenfahrzeugträgers (1) und in Höhe des Wagenboden (24) des getragenen Schienenfahrzeuges (2), bei gleichem Niveau versehen sind oder diese als Zwischenstufen ausgebildet, zwischen der Höhe des Wagenbodens (24) des getragenen Schienenfahrzeuges (2) und der Bahnsteigkante (23) angebracht sind und insbesondere automatisch mit den Türen (21) steuerbar entweder in die Höhe des Wagenbodens (24) oder dazwischen, einen Abstand zur Bahnsteigkante (23) überbrückend, bewegbar eingerichtet sind.

12. Schienengebundener Schienenfahrzeugträger, nach einem der vorhergehenden Ansprüche, **dadurch gekennzeichnet, daß** die Fahrmotore der Radsätze (4) Elektromotoren sind, die bei Speisung von der Oberleitung der Strecke des selbstfahrenden Schienenfahrzeugträgers (1) über das getragene Schienenfahrzeug (2) mit einer zusätzlichen Starkstromkupplung und bei entsprechend hoher Oberleitungsspannung über einen an dem getragenen Schienenfahrzeug, vorzugsweise auf dem Dach, angebrachten Spannungsumsetzer gespeist werden.

13. Schienengebundener Schienenfahrzeugträger, nach einem der vorhergehenden Ansprüche, **dadurch gekennzeichnet, daß** der selbstfahrende Schienenfahrzeugträger (1) mit wenigstens einem Antriebsaggregat (28) ausgestattet ist, das von einer Verbrennungskraftmaschiene, wie Benzin- oder Dieselmotor, Gasturbine, Sterlingmaschine, Verbrennungsmotorelektrisch oder -hydraulisch oder bei Speisung vom getragenen Schienenfahrzeug (2) elektrohydraulisch ausgebildet ist oder aus einem Elektroumformer einem Spannungs/Stromumrichter besteht.

14. Schienengebundener Schienenfahrzeugträger, nach einem der vorhergehenden Ansprüche, **dadurch gekennzeichnet, daß** der selbstfahrende Schienenfahrzeugträger (1) eine Baulänge zwischen den mechanischen Kupplungsanschlüssen (10) der Fronttore (7) aufweist, die größer ist als die Baulänge des getragenen Schienenfahrzeuges (2) über die mechanischen Kupplungen (9), wobei das auf dem schienengebundenen Schienenfahrzeugträger (1) angedockte getragene Schienenfahrzeug (2) nur an einem der mechanischen Kupplungsanschlüsse (10) des an der, in Fahrtrichtung (25) gelegenen, Stirnseite (14) angeordneten Frontores (7) angekuppelt ist oder bei einem Abstand der beiden mechanischen Kupplungsanschlüssen (10) gleich der Baulänge des getragenen Schienenfahrzeuges (2) ist dieses vorzugsweise an den mechanischen Kupplungsanschlüssen (10) beider Fronttore (7) angekuppelt.

15. Schienengebundener Schienenfahrzeugträger, nach einem der vorhergehenden Ansprüche, **dadurch gekennzeichnet, daß** der selbstfahrende Schienenfahrzeugträger (1) aus zwei mit einer Gelenkverbindung (26) verbundenen Schienenfahrzeugträgerteilen (1', 1'') zusammengesetzt ist, deren lotrechte Gelenkachse, insbesonders mit einer Gelenkachse des angekuppelten, von einem Gelenkfahrzeug gebildeten, getragenen selbstfahrenden Schienenfahrzeug (2) im wesentlichen zusammenfällt.

16. Schienengebundener Schienenfahrzeugträger, nach einem der vorhergehenden Ansprüche, **dadurch gekennzeichnet, daß** die Schienen (17) des Gleises (16), bei einem aus aus zwei mit einer Gelenkverbindung (26) verbundenen Schienenfahrzeugträgerteilen (1', 1'') zusammengesetzten schienengebundenen Schienenfahrzeugträger (1) längsverschieblich gelagert sind.

17. Schienengebundener Schienenfahrzeugträger, nach einem der vorhergehenden Ansprüche, **dadurch gekennzeichnet, daß** die Schienen (17) des Gleises (16) für ein getragenes Schienenfahrzeug (2) auf den verbundenen Schienenfahrzeugträgerteilen (1', 1'') ortsfest angebracht sind und im Bereich der Gelenkverbindung (26), einen Abstand voneinander freilassend, geteilt sind und der Abstand in gerader Stellung der beiden verbundenen Schienenfahrzeugträgerteile (1',1") und einem geöffnetem Fronttor (7) mit einem Gleiszwischenstück überbrückt it, das beim Schließen beider Fronttore (7) gesteuert den Abstand freigibt, vorzugsweise durch Verschieben in Längsrichtung des Schienenfahrzeugträgers (1) oder durch seitliches oder nach unten gerichtetes Verschieben oder Verschwenken.

18. Schienengebundener Schienenfahrzeugträger, nach einem der vorhergehenden Ansprüche, **dadurch gekennzeichnet, daß** die Schienen (17) des Gleises (16) für ein getragenes Schienenfahrzeug (2) auf den verbundenen Schienenfahrzeugträgerteilen (1' ,1") im Bereich der Gelenkverbindung (26) jeweils wenigstens einmal, mit einmal längsgeteilten Schienenköpfen ausgebildet sind, wobei jeweils ein linker Schienenteil auf dem einen Fahrzeugträgerteil (1') mit einem rechten Schienenteil auf dem anderen Fahrzeugträgerteil (1'') und umgekehrt, sich zu einem vollständigen Schienenkopf ergänzen und soweit ineinandergreifen um einen Längenausgleich des Gleises (16) für die Abwinkelung an der Gelenksverbindung (26) bei Bogenfahrt, sowohl bei ortsfest, als auch bei verschieblich angebrachten Schienen (17) zu ermöglichen.

19. Schienengebundener Schienenfahrzeugträger, nach einem der vorhergehenden Ansprüche, **dadurch gekennzeichnet, daß** das getragene Schienenfahrzeug (2) selbstfahrend eingerichtet ist, insbesonders mit elektrischem Antrieb über die Stromversorgung einer Oberleitung (8) oder mit Antrieb mit Verbrennungsmaschinen(en) mit elektrischen Generator(en) und vorzugsweise für die Speisung der Fahrmotore des Schienenfahrzeugträgers (1) eingerichtet.

20. Schienengebundener Schienenfahrzeugträger, nach dem vorhergehenden Anspruch, **dadurch gekennzeichnet, daß** das getragene selbstfahrende Schienenfahrzeug (2) als (Mehr)-Gelenktriebwagen, insbesondere in Schmalspur, vorzugsweise mit Niederflurwagen, für den Personentransport eingerichtet ist.

21. Schienengebundener Schienenfahrzeugträger, nach einem der vorhergehenden Ansprüche, **dadurch gekennzeichnet, daß** das getragene Schienenfahrzeug (2) mit einer Heizung versehen ist, die mit einer Schalteinrichtung auf die Speisung mit Bremsstrom und/oder überschüssigen Traktionsstrom des eingerichtet ist.

22. Schienengebundener Schienenfahrzeugträger, nach einem der vorhergehenden Ansprüche, **dadurch gekennzeichnet, daß** auf dem Schienenfahrzeugträger (1) an einem Fronttor (7) oder im Bereich neben einem Fronttor (7) ein Hilfsfahrstand eingerichtet ist.

## Claims

1. Railbound railvehicle-support (1) with several wheel sets (4), the wheels of which are braked by a brake system, with a railcar floorframe with railcar frame-cheeks whose top edge is lying in the area of the upper circumference of the wheels of the wheel sets or over it with two runways for the wheels of a supported railvehicle (2) and with at least one on the frontdoor (7),attached on a frontside, which is positioned around a perpendicular swivel-axle laterally on a railcar frame-cheek swiveling outwards. The frontdoor (7) at which the closing position on the frontside of the roilvehicle-support (1) can be bolted, are mounted outward, before all a buffer-plate, the connections of the vehicle,including the connection instruments and lighting systems, and there are installed on the railbound railvehicle-support (1) driving motors (28) on at least one or several or on all wheel sets (4) or wheels self-propelled that are driven at least over one feeding installation which is attached on the railvehicle-support (1).
Moreover, there are mounted on it at least a brake system, installations for the running of the vehicle and safety facilities that are controled by one or more existing control devices, installed on the railvehicle-support (1),and it is provided with a docking equipment for a docking ramp, **characterized by** the fact that the self-propelled railbound roilvehicle-support (1), whose driving motors are driven either at least by one engine unit (28) or a feeding installation, attached on it, carries the tracks of the rail as runways for a supported self-propelled railvehicle (2) and, additionally, lighting systems and sensor devices that are controled, as well as the brake system, the installations for the running of the vehicle and safety facilities, either over the available control device(s) on the roilvehicle-support (1) and at least over one control device, foreseen on the supported railvehicle (2) or at least a part of it, essentially directly controled by the foreseen control device(s) of the supported railvehicle (2) and/or to transfer data of the system and the facilities.

2. Railbound railvehicle-support according to the aforementioned claim, **characterized by** the fact that at least one frontdoor (7) of the self-propelled railvehicle-support (1) is provided with a mecanical coupling connection (10) at the inside (11). This coupling connection is equiped with an enclosed plug coupling connection (13) being clutchable with a plug coupling (12),added to a mecanical couple (9), particularly a controlable plug coupling, preferably for a multiple control-system with enlarged operational scale with which the control systems of the supported railvehicle (2) can be connected on the self-propelled railvehicle-support (1).

3. Railbound railvehicle-support according to one of the previous claims, **characterized by** the fact that the self-propelled railvehicle-support (1) is equiped with a docking system at the frontside (14, 14'), which is provided with at least one ramp buffer (18) each and one controlable mecanical bolt connection (19) for an assigned dockramp:(20) that is installed with an adapted rampbuffer-holder and with a mecanical boltpart.

4. Railbound railvehicle-support according to one of the previous claims **characterized by** the fact that additionally to the controlable plug coupling (12) and the plug coupling connection (13) a high-voltage current plug couple of the railvehicle (2) is provided and an additional high-voltage current couple plug of the self-propelled railvehicle-support (1) is foreseen for the supply of the feeding current for the driving motors to the drive current transformer and/or for the supply of the brake current of the driving motors to the broke resistances of the supported roilvehicle (2).

5. Railbound railvehicle-support according to one of the previous claims, **characterized by** the fact that there is articulated a frontdoor (7) on each frontside (14, 14') of the railvehicle-support (1).

6. Railbound railvehicle-support according to one of the previous claims, **characterized by** the fact that the frontdoor (7) is mode up of two frontdoor wings,preferable the same width, which are swivel-positioned on the both carframe-cheeks (6, 6') and can be bolted together, particularly with the railcar-floorframe (5).

7. Railbound railvehicle-support according to one of the previous claims, **characterized by** the fact that the front door (7) and the frontdoor wings end downward over the height of the railheads of the rails (17) of the supported railvehicle (2).

8. Railbound railvehicle-support according to one of the previous claims, **characterized by** the fact that at least in one frontdoor (7) or in the framecheeks-socles (15) is installed the engine unit (28) and/or one or several feeding installation(s) and particularly its control system(s) and/or the control systems of the brake system as well as of the installations for the running of the vehicle and of the safety facilities and the sensor devices of the self-propelled railvehicle-support (1).

9. Railbound railvehicle-support according to one of the previous claims, **characterized by** the fact that the framecheek-socles (15) on the railcar frame-cheeks (6, 6') of the railvehicle-support (1) ore recessed,at least over a width of the doors (21) of the supported railvehicle (2).

10. Railbound railvehicle-support according to one of the previous claims, **characterized by** the fact that the fromecheek-socles (15) for the fitting of appliances of the driving facilities and of the brake-operation equipment and/or of the feeding installations like current transformer, electrochemical generator or energy-storage of any kind like accumulators,charging devices for it,lighting systems and/or control devices and containers and facilities for operating resources and or operating substances or like that are installed.

11. Railbound railvehicle-support according to one of the previous claims, **characterized by** the fact that the railcar frame-cheeks (6,6) of the railvehicle-support (1) are provided with steps (22), at least over the width of the doors (21), either in the height of platform-edges (23) on the section of the railvehicle-support (1) and in height of the railcar-floor (24) of the supported railvehicle (2) at an equal level or that those railcar frame-cheeks are formed as interposed steps and mounted between the height of the railcar-floor (24) of the supported railvehicle (2) and the platform edge (23) and that they are installed particularly automatically controlable with the doors (21) and movable either in the height of the railcar-floor (24) or between, bridging a distance to the platform edge (23).

12. Railbound railvehicle-support according to one of the previous claims, **characterized by** the fact that the driving motors of the wheelsets (4) are electric motors which are fed by the overhead contact line of the stretch of the self-propelled roilvehicle-support (1) over the supported railvehicle (2) with an additional high-voltage current couple and at an appropriate high tension of the overhead contact line and over an electroconverter on the supported railvehicle,preferably installed on the roof.

13. Railbound railvehicle-support according to one of the previous claims, **characterized by** the fact that the self-propelled roilvehicle-support (1) is equiped with at least one engine unit (28) formed by a combustion engine like petrol engine or diesel engine,gas turbine,sterling machine, combustion motor electric or hydraulic or formed hydroelectric at the feeding from the supported railvehicle (2) or consisting of on energyconverter, a tension transformer/current transformer.

14. Railbound railvehicle-support according to one of the previous claims, **characterized by** the fact that the self-propelled railvehicle-support (1) shows a construction length between the mecanical couple connections (10) of the frontdoors (7) being larger than the construction length of the supported railvehicle over the mecanical couples (9). It is a fact that the supported railvehicle (2),docked on the railbound railvehicle-support (1), is only coupled on one of the mecanical couple connections (10),located on the frontside (14) of the frontdoor (7), facing the railvehicle (25) or at a distance of the both mecanical couple connections (10) equal to the construction length of the supported railvehicle(2) is preferably coupled on the mecanicol couple connections (10) of both frontdoors (7).

15. Railbound railvehicle-support according to one of the previous claims, **characterized by** the fact that the self-propelled railvehicle-support (1) is composed of two parts of railvehicle-supports (1', 1"), connected by a joint-link (26), the perpendicular axle of which is in the main identical, particularly with an articulation axle of the coupled self-propelled railvehicle (2), formed by an articulated railvehicle.

16. Railbound railvehicle-support according to one of the previous claims, **characterized by** the fact that the rails (17) of the track (16) are mounted movable longwise at a railbound railvehicle-support (1), composed of two parts of railvehicle-supports (1', 1"), connected with a joint-link (26).

17. Railbound railvehicle-support according to one of the previous claims, **characterized by** the fact that the rails (17) of the track (16) are installed for a supported railvehicle (2) on the connected parts of railvehicle-supports (1', 1") stationarily and divided in the area of the joint-link (26),leaving a distance from each other and the distance in straight position of the both connected parts of the railvehicle-support (1', 2") and an open frontdoor (7) is bridged by a rail connecting piece, that releases the distance controled at the closing of both frontdoors (7), preferably by shifting of the railvehicle-support (1) lengthwise or by shifting laterally or directing downwards or by swiveling.

18. Railbound railvehicle-support according to one of the previous claims, **characterized by** the fact that the rails (17) of the track (16) for a supported railvehicle (2) on connected parts of railvehicle-supports (1', 1'') are farmed with railheads, once divided longwise, in the area of the joint-link (26), at least once each.
Combined with it, a left part of the rail on one part of a railvehicle-support (1') with a right part of the rail on the other part of the railvehicle-support (1'') each and reverse, complete with each other an entire railhead and interlock as far that a compensation in the length of the track (16) for the bend on the joint-link (26),ot on arch-shaped drive, is possible with stationary as well as shifting attached rails (17).

19. Railbound railvehicle-support according to one of the previous claims, **characterized by** the fact that the supported railvehicle (2) is installed self-propelled, particularly st up by an electrical drive by the power supply of an overhead contact line (8) or by a drive with internal combustion engine with electrical generator(s) and preferably for the feeding of the driving motors of the railvehicle-support (1).

20. Railbound railvehicle-support according to the preceding claim, **characterized by** the fact that the supported self-propelled railvehicle (2) is installed as a (multi-)articulated railcar, particularly narrow-gaged, preferably with low-level waggons for the transport of people.

21. Railbound railvehicle-support according to one of the previous claims, **characterized by** the fact that the supported roilvehicle (2) is provided with a heating that is installed with a switchgear on the feeding with brake-current and/or surplus traction-current of the railbound railvehicle-support (1).

22. Railbound railvehicle-support according to one of the previous claims, **characterized by** the fact that on the railvehicle-support (1) is installed on the frontdoor (7) or in the area beside a frontdoor (7) an emergency drive-stall.

## Revendications

1. Support d'un véhicule sur rails (1) avec plusieurs jeux de roues (4) dont les roues d'une installation de freinage sont freinées avec un bâti du plancher de véhicule avec des bordures du bâti de véhicuel dont le bord supérieur est situé dans la zone de la circonférence supérieure des roues de jeux de roues ou par-dessus, avec deux voies à rouler pour les roues d'un véhicule sur rails porté (2), et avec du moins une portière de façade (7), placée à la façade , montée à une bordure du bâti de véhicule,en substance pivotante autour un axe articulé perpendiculaire, latéralement orientable vers l'extérieur. Cette portière de facade peut être verrouillée à la facade du support d'un véhicule sur rails (1) à la position fermante et y sont placés vers l'extérieur en particulier un tampon protecteur, les jonctions du véhicule installées avec les jonctions de commande et les installations d'éclairage et le support d'un véhicule sur rails,fixé aux rails (1), est muni d'un groupe propulseur (28), au moins à un ou plusieurs ou à tous les jeux de roues (4) ou aux roues automoteures qui sont actionnées du moins sur l'installation d'alimentation, placés sur le support d'un véhicule sur rails (1); en outre y sont placées du moins une installation de freinage, des installations en état de marche et des installations de sûreté, qui sont commandées sur un ou plusieurs système(s) de commande et de contrôle, se trouvant au support d'un véhicule sur rails (1), et celui est muni d'un dispositif d'arrimage pour une rampe d'arrimage, **caractérisée par le fait que** le support d'un véhicule sur rails automoteur et fixé aux rails (1),dont les moteurs en marche sont propulsés soit du moins par un groupe électrogène (28) ou par l'installation d' alimentation y attachée, qui porte des rails d'une voie comme voies à rouler pour un véhicule sur rails porté automoteur (2) et en outre une installation d'éclairage et des détecteurs qui sont commandés ainsi que l'installation de freinage, les installations en état de marche et celles de sûreté soit sur le système de commande et de contrôle se trouvant sur le support d'un véhicule sur rails (1) ou du moins sur un système de commande et de contrôle du véhicule sur rails (2) porté,y prevu, ou du moins une partie,essentiellement directement commandé du système/des systèmes de commande et de contrôle prévu(s),du véhicle sur rails porté (2) et/ou sont transférées les données des installations technique et électrique.

2. support d'un véhicule sur rails,fixé aux rails, selon la révendication precédente,**caractérisée par le fait que** du moins l'unique portière de façade (7) du support d'un véhicule sur rails automoteur (1) est munie à son côté intérieur (11) d'une jonction d'accouplement mécanique (10) qui est couplable avec un accouplement mécanique (9), de préférence gouvernable du véhicule sur rails porté (2) et qui est équipé avec une jonction dé la fiche d'accouplement (13) adjointe, laquelle peut être couplée avec une prise de courant d'accouplement (12), adjointe d l'accouplement mécanique (9), en particulier d'une prise de courant d'accouplement réglable,de préférence pour un réglage multiple avec une volume des fonctions élargie avec qui les systèmes de commande et de contrôle du véhicule sur rails porté (2) peuvent être attachés au support d'un véhicule sur rails automoteur (1).

3. Support d'un véhicule sur rails, fixé aux rails, selon une des révendications précédentes, **caractérisées par le fait que** le support d'un véhicule sur rails automoteur (1) est équipé avec un dispositif d'un arrimage à la façade (14,14') qui est muni chaque fois au moins d'un tampon de rampe (1B) et d'une jonction de verrouillage mécanique contrôlable (19) pour une rampe d' arrimage classée (20) qui est installé avec un dispositif du tampon de rampe conformiste et avec une pièce de verrouillage mécanique.

4. Support d'un véhicule sur rails, fixé aux rails, selon une des révendications précédentes, **caractérisées par le fait que**, complémentaire d la prise de courant d'accouplement contôlable (12) et a la jonction d'une fiche d'accouplement (13), une fiche d'accouplement du courant à haute tension du véhicule sur rails (2) et de plus une jonction d'une fiche d'accouplement (13) du support d'un véhicule sur rails automoteur (1) est prévu pour l'adduction du courant d'alimentation pour les moteurs en marche au convertisseur du courent a rouler et/ou du courant à freiner les moteurs en marche aux résistances du freinage du véhicule sur rails porté (2).

5. Support d'un véhicule sur rails, fixé aux rails, selon une des révendication précédentes, **caractérisées par le fait qu'**une portière de façade (7) est articulée à chaque façade (14,14') du support d'un véhicule sur rails (1).

6. Support d'un véhicule sur rails,fixé aux rails, selon une des révendications précédentes, **caractérisées par le fait que** la portière de façade (7) se compose de deux battants de portière de facade, de préférence de la même largeur, qui sont montés orientables aux deux bordures de bâti du véhicule (6,6') et qui peuvent être verrouillés l'un avec l'autre, en particulier avec le bâti du plancher du véhicule (5).

7. Support d'un véhicule sur rails,fixé aux rails, selon une des révendication$ précédentes, **caractérisées par le fait que** la portière de la facade (7) et les battants de portière de facade prennent fin vers le bas sur la hauteur des têtes de rails (17) du véhicule sur rails porté (2).

8. Support d'un véhicule sur rails, fixé aux rails, selon une des révendications précédentes, **caractérisées par le fait que** du moins sont installés à une portière de façade (7) ou aux sôcles des bordures de bâti (15) le groupe propulseur (28) et/ou une ou plusieurs dispositif(s) de l'alimentation, en particulier son/ses mécanisme(s) de télécommande et/ les mécanismes de télécommande de l'installation de freinage, ainsi que des installations en état de marche et des installations de sûrété et des détecteurs du support d'un véhicule sur rails automoteur (1).

9. Support d'un véhicule sur rails,fixé aux rails, selon une des révendications précédentes, **caractérisées par le fait que** les sôcles de bordures de bâti (15) sur les bordures de bâti du véhicule (6,6') du support d' un véhicule sur rails (1) sont laissés en blanc, du moins sur la largeur des portières (21) du véhicule sur rails porté (2).

10. Support d'un véhicule sur rails, fixé aux rails, selon une des révendications précédentes, **caractérisées par le fait que** les socles des bordures de bâti (15) sont installés pour le montage de dispositifs des installations en état de marche et celles du freinage et/ou de dispositifs pour l'alimentation, comme convertisseur du courant, le producteur électrochimique ou l'accumulation d'énergie de toutes sortes, comme des accumulateurs, des dispositifs de chargement pour cela, des installations d'éclairage et/ou des installations de contrôle et des récipients et des installations pour les moyens de production et /ou de matériaux et outres choses de ce genre.

11. Support d'un véhicule sur rails, fixé aux rails, selon une des révendications précédentes, **caractérisées par le fait que** les bordures du bâti du véhicule (6,6') du support d'un véhicule sur rails (1) sont munis de marches (22), du moins au-delà la largeur des portières (21), ou d l'hauteur des bords de quais (23) sur la distance du support d'un véhicule sur rails (1) et montés d l'hauteur du plancher de véhicule (24) du véhicule sur rails porté (2), de niveau pareil, ou dévelopés comme des marches intermédiaires entre la hauteur du plancher de véhicule (24) du véhicule sur rails porté (2) et le bord de quoi (23), et installés en particulier agitable et automatiquement contrôlable avec les portières (21) ou à l'hauteur du plancher de véhicule (24) ou parmi eux, franchissant une distance au bord de quai (23).

12. Support d'un véhicule sur rails, fixé aux rails, selon une des révendications précédentes, **caractérisées par le fait que** le groupe propulseur des jeux de roues (4) sont des moteurs électriques, qui sont alimentés à l'alimentation par la caténaire du trajet du support d'un véhicule sur rails automoteur (1) sur le véhicule sur rails porté (2) avec un accouplement de courant à haute tension supplémentaire et à une tension de caténaire assez haute sur un convertisseur de tension au véhicule sur rails porté (2), de préférence monté sur la toite.

13. Support d'un véhicule sur rails, fixé aux rails, selon une des révendications précédentes, **caractérisées par le fait que** le support d'un véhicule sur rails automoteur (1) est équipé avec un groupe propulseur (28) du moins,qui est formé d'un moteur à combustion interne comme un moteur d essence ou diesel, une turbine à gaz, une machine sterling, un moteur d combustion interne électrique ou hydro-électrique ou par alimentation du véhicule sur rails porté (2) hydro-électrique ou consiste en un convertisseur du courant, un convertisseur de tension/du courant

14. Support d'un véhicule sur rails, fixé aux rails, selon une des révendications précédentes, **caractérisées par le fait que** le support d'un véhicule sur rails automoteur (1) montre une longueur de construction entre les jonctions d'accouplement mécanique (10) des portières de façade (7) qui est plus grande que la longueur de construction du véhicule sur rails porté (2) sur les accouplements mécaniques (9) où le véhicule sur rails porté (2) arrimé au support d'un véhicule sur rails, fixé aux rails (1), est seulement accroché à une des jonctions d'accouplement mécanique (10), disposé à la façade (14) de la portière de façade (7), situé au sens de la marche (25), ou accroché de préférence à une distance des deux jonctions d'accouplement mécanique (10) pareil à la longueur de la construction du véhicule sur rails porté (2) aux jonctions d' accouplement mécanique (10) des deux portières de façade (7).

15. Support d'un véhicule sur rails, fixé aux rails, selon une des révendications précédentes, **caractérisées par le fait que** le support d'un véhicule sur rails automoteur (1) est assemblé de deux parties d' un support d'un véhicule sur rails (1',1"), jointes avec une jonction articulaire (26) dont l'essieu articulé perpendiculaire est identique, en substance en particulier avec un essieu articulé du véhicule sur rails porté automoteur accroché (2), formé d'un véhicule articulé.

16. Support d'un véhicule sur rails, fixé aux rails, selon une des révendications précédentes, **caractérisées par le fait que** les rails (17) de la voie (16) sont montés coulissants dans le sens de la longueur d un support d'un véhicule sur rails, fixé aux rails (1), se composant de deux parties du support d'un véhicule sur rails (1',1") avec une jonction articulaire (26).

17. support d'un véhicule sur rails, fixé aux rails, selon une des révendications précédentes, **caractérisées par le fait que** les rails (17) de la roue (16) pour un véhicule sur rails porté (2) sont montés stationnaires sur les parties du support d'un véhicule sur rails jointes (1',1") et partagés dans la zone de jonctions articulaires (26) laissant libre une distance l'une de l'autre, et la distance en position droite des deux parties du véhicule sur rails jointes (1',1") et d'une portière de façade (7) ouverte est franchie par une pièce intermédiaire de rails, qui laisse échapper la distance commandée en fermant les deux portières de façade (7), de préférence en déplacant le support d'un véhicule sur rails (1) au sens de la longueur ou sur le côté ou vers le bas ou en le pivotant.

18. Support d'un véhicule sur rails, fixé aux rails, selon une des révendications précédentes, **caractérisées par le fait que** les rails (17) de la roue (16) pour un véhicule sur rails porté (2) sur les parties du support d'un véhicule sur rails assemblées (1', 1"), dans la zone de la jonction articulaire (26) sont construits, chaque fois au moins une fois, avec de têtes de rails, une fois partagées dans le sens de la longueur; là, se complètent chaque fois une partie gauche du rail avec une partie du support d'un véhicule (1') et une partie droite du rail avec l'autre partie du support d'un véhicule (1''), et vice versa, d une tête de rails complète et s'enchaînant autant qu'une compensation de la longueur de la roue (16) est possible pour le pliage angulaire à la jonction articulaire (26),en roulant un arc, non seulement aux rails stationnaires mais aussi aux rails (17) montés coulissants.

19. Support d'un véhicule sur rails, fixé aux rails, selon une des révendications précédentes, **caractérisées par le fait que** le véhicule sur rails porté (2) est automoteur, en particulier installé avec une propulsion électrique sur l'alimentation avec le courant d'une caténaire (8) ou avec une propulsion par (un/des) moteur(s) d combustion interne avec (un/des) générateur(s) et, de préférence pour l'alimentation des groupes propulseurs du support d'un véhicule sur rails (1).

20. Support d'un véhicule sur rails, fixé aux rails, selon la révendication précédente, **caractérisée par le fait que** le véhicule sur rails porté automoteur (2) est construit comme autorail (d plusieurs joints) articulé, en particulier en voie étroite, de préférence avec des véhicules d bas châssis, pour le transport de personnes.

21. Support d'un véhicule sur rails, fixé aux rails, selon une des révendications précédentes, **caractérisées par le fait que** le véhicule sur rails porté (2) est muni d'un chauffage qui est installé avec un tableau de commande 8 l'alimentation avec de courant de freinage et/ ou de courant de traction excédentaire du support d'un véhicule sur rails, fixé aux rails (1).

22. Support d'un véhicule sur rails, fixé aux rails, selon une des révendications précédentes, **caractérisées par le fait que** sur le support d'un véhicule sur rails (1) est installé une platforme provisoire/ auxiliaire en état de marche à une portière de facade (7) ou dans la zone à côté d'une portière de façade (7).
